Europäisches Patentamt

European Patent Office

Office européen des brevets

(11) Publication number: **0 492 788 A2**

## EUROPEAN PATENT APPLICATION

(21) Application number: **91310413.9**

(22) Date of filing: **12.11.91**

(51) Int. Cl.⁵: **C08F 4/654**, C08F 4/658, C08F 4/685, C08F 10/00

(30) Priority: **28.11.90 FR 9015249**
**04.12.90 FR 9015453**

(43) Date of publication of application:
**01.07.92 Bulletin 92/27**

(84) Designated Contracting States:
**AT BE CH DE DK ES FR GB GR IT LI LU NL SE**

(71) Applicant: **BP Chemicals Limited**
**Belgrave House 76 Buckingham Palace Road**
**London, SW1W 0SU(GB)**

(84) **BE CH DE DK ES GB GR IT LI LU NL SE AT**

(71) Applicant: **BP CHEMICALS S.N.C.**
**Tour Neptune la Défense 1, 20, Place de Seine**
**F-92400 Courbevoie(FR)**

(84) **FR**

(72) Inventor: **Bailly, Jean-Claude Andre**
**BP Chemicals S.N.C., P.O. Box No. 6**
**F-13117 Lavera(FR)**
Inventor: **Behue, Patrick**
**BP Chemicals S.N.C., P.O. Box No. 6**
**F-13117 Lavera(FR)**
Inventor: **Jenny, Charles**
**BP Chemicals S.N.C., P.O. Box No. 6**
**F-13117 Lavera(FR)**

(74) Representative: **Denbigh, Keith Warwick et al**
**BP INTERNATIONAL LIMITED Patents**
**Division Chertsey Road**
**Sunbury-on-Thames Middlesex, TW16 7LN(GB)**

(54) Process for preparing a Ziegler-Natta type catalyst.

(57) The present invention relates to a process for the preparation of a catalyst of the Ziegler-Natta type comprising precipitating titanium onto a spheroidal magnesium chloride support. This process comprises (a) contacting a magnesium chloride support (A) with an electron-donor compound (B) which contains labile hydrogen, (b) contacting the support of (a) with an organometallic compound (C) which is a reducing agent for titanium, (c) washing the product of (b) with a liquid hydrocarbon and (d) contacting the product of (c) with at least one titanium compound and possibly with at least one vanadium compound used in such quantity that the molar ratio of the quantity of titanium to the quantity of vanadium is greater than 1.

The present invention relates to a process for the preparation of a catalyst of the Ziegler-Natta type, based on titanium, supported on spheroidal particles of magnesium chloride. The catalyst is suitable for the polymerisation of olefins such as ethylene and is particularly suitable for the manufacture of ethylene copolymers, especially using to a gas phase copolymerisation process.

It is known that catalytic systems of the Ziegler-Natta type consist of a catalyst comprising at least one compound of a transition metal, such as titanium, and of a cocatalyst comprising at least one organometallic compound of a metal such as aluminium. It is known, furthermore, that the properties of these catalysts can be greatly affected when the transition metal compound is employed with a support consisting of a solid inorganic compound, such as magnesium chloride. In a process for preparing a supported catalyst the properties of the support and the process for preparing the catalyst, which generally comprises fixing the transition metal compound on the said support, are of very great importance for the catalyst characteristics. These characteristics are of great importance for the performance of the catalyst in a reaction of homopolymerisation or copolymerisation of olefins.

According to European Patent Application EP-A-0,099,772, it is known to prepare a catalyst by precipitation of a transition metal compound on a spheroidal support of magnesium chloride containing products having Mg-C bonds and containing a low proportion of an electron-donor compound. The transition metal compound is a halogenated titanium compound and the precipitation of the latter on the support is performed by a reaction of comprising the reduction of the titanium compound with a reducing agent, such as an organometallic compound. It has been observed, however, that this process requires the use of a large quantity of titanium compound, only a small proportion of which is fixed on the support, and the use of a large quantity of reducing agent. Consequently, catalyst washing operations are generally necessary to remove the excess of titanium compound which is not fixed on the support and especially to remove the excess of reducing agent. These washing operations are costly and difficult because of the toxic and corrosive nature of titanium compounds.

A process for the manufacture of a spheroidal catalyst based on titanium supported on magnesium chloride has now been found, which process overcomes the disadvantages mentioned above. In particular, the process makes it possible to prepare a spheroidal catalyst based on titanium which exhibits a high activity in the polymerisation of olefins. The catalyst is particularly suitable for the manufacture of ethylene polymers, and is especially useful for producing ethylene copolymers in a gas phase copolymerisation process. In the latter case, the catalyst enables an ethylene copolymer powder to be manufactured directly in the form of spheroidal and non-adhesive particles; this powder having good flow properties and being easy to handle.

Thus, according to the present invention, a process for the preparation of a catalyst of the Ziegler-Natta type comprising precipitating titanium onto a spheroidal magnesium chloride support is characterised in that the process comprises following steps :

(a) contacting a magnesium chloride support (A) with an electron-donor compound (B) which contains labile hydrogen,

(b) contacting the product of (a) with an organometallic compound (C) which is a reducing agent for titanium,

(c) washing the product of (b) with a liquid hydrocarbon and

(d) contacting the product of (c) with at least one titanium compound soluble in the liquid hydrocarbon,

and in that the magnesium chloride support (A) comprises from 80 to 99,5 mol % of magnesium chloride and from 0,5 to 20 mol % of an electron-donor compound (D) free from labile hydrogen, and is in the form of spheroidal particles which have a weight average diameter, Dm, of from 10 to 100 microns and a narrow particle size distribution such that the ratio of the weight-average diameter, Dm, to the number-average diameter, Dn, is less than 3.

According to one embodiment of the present invention, step (d) of the preparation of the catalyst comprises contacting the product of (c) with at least one titanium compound and with at least one vanadium compound both soluble in the liquid hydrocarbon and used in such quantities that the molar ratio of the quantity of titanium to the quantity of vanadium is greater than 1. In this case the organometallic compound (C) is also a reducing agent for vanadium.

According to the present invention, the preparation of the catalyst includes a particular magnesium chloride support. The support is substantially free from products containing Mg-C bonds, by this it is meant that the ratio of the number of Mg-C bonds to the number of magnesium atoms in the support is less than 0.001. The support is therefore not capable of spontaneously reducing a titanium compound or a vanadium compound. The atomic ratio Cl/Mg of the support is substantially equal to 2. The support contains from 80 to 99.5 mol % of magnesium chloride and from 0.5 to 20 mol % of compound (D). It preferably contains from 80 to 95 mol % of magnesium chloride and from 5 to 20 mol % of compound (D).

2

The electron-donor compound (D), can be a Lewis base. It must be free from labile hydrogen and, consequently, cannot be chosen from water, alcohols or phenols. It is advantageously chosen from ethers, thioethers, sulphones, sulphoxides, phosphines, phosphoramides, amines and amides. It is preferred to employ electron-donor compounds of low complexing power in relation to magnesium chloride, such as ethers.

It has been found that the best results are obtained when the support is substantially homogeneous that is to say it is a composition in which the compound (D) is distributed substantially homogeneously throughout the magnesium chloride particle, from the core to the periphery of the latter, and not only at its periphery. As a result, in order to obtain a support of this kind, it is generally recommended to prepare it by a method involving the precipitation of the support.

Advantageously the support has a substantially amorphous structure, that is to say a structure where the forms of crystallinity have to a large extent or even completely disappeared. It has been found that such amorphous supports yield high-performance catalysts, which are capable of withstanding the enormous growth stresses which occur during a polymerisation reaction, particularly in a gaseous phase reaction. This particular form of the support can be obtained by a precipitation reaction carried out under carefully controlled conditions.

The support is additionally characterised by the fact that it consists of spheroidal particles which have a mass-average diameter of 10 to 100 microns. The particles of the support have a very narrow particle size distribution such that the ratio Dm/Dn of the weight-average diameter, Dm, to the number-average diameter, Dn, is less than 3, preferably less than 2. In preferred embodiments, the particle size distribution of these particles is such that the ratio Dm/Dn is from 1.1 to 1.5 : there is a virtually complete absence of particles of a diameter greater than 1.5 x Dm or smaller than 0.6 x Dm.

The term "spheroidal particles" is intended in this specification to mean particles which are substantially spherical in shape. Thus, if D and d denote the longer and the shorter axes of the particles respectively, the ratio D/d is for each particle close to 1, generally it is less than or equal to 1.4, preferably less than or equal to 1.3. It is also possible to define a coefficient of circularity of the particles, which is also very close to 1.

The specific surface of the support particles can be from 10 to 100 $m^2/g$ (BET), preferably from 20 to 60 $m^2/g$ (BET) and the relative density of these particles can be approximately from 1.2 to 2.1.

The support can be prepared by reacting a dialkylmagnesium compound with an organic chlorine compound in the presence of the electron-donor compound, (D). The electron-donor (D) is used as a complexing agent and not as a reacting agent in this preparation. For this reason, the compound (D) cannot be chosen from compounds capable of reacting with organomagnesium derivatives. The dialkylmagnesium compound chosen can be a product of formula $R_1MgR_2$, in which $R_1$ and $R_2$ are identical or different alkyl radicals containing from 2 to 12 carbon atoms. One of the important properties of this dialkylmagnesium compound is of being directly soluble in the hydrocarbon medium where the preparation of the support will be carried out. The organic chlorine compound has a general formula $R_3Cl$ in which $R_3$ is a secondary or, preferably, tertiary alkyl radical containing from 3 to 12 carbon atoms. The electron-donor compound employed, (D), is preferably an ether of formula $R_4OR_5$ in which $R_4$ and $R_5$ are identical or different alkyl radicals containing from 1 to 12 carbon atoms.

In addition, the various reactants used for the preparation of the support can be preferably employed in the following conditions :
- the molar ratio $R_3Cl/R_1MgR_2$ is from 1.9 to 2.5, preferably from 2 to 2.3,
- the molar ratio $(D)/R_1MgR_2$ is from 0.1 to 1.2, preferably from 0.3 to 0.8.

The reaction between $R_1MgR_2$ and $R_3Cl$ in the presence of the electron-donor compound ,(D), is a precipitation reaction which is generally carried out in a liquid hydrocarbon with stirring. A person skilled in the art knows that, in this case, physical factors such as the viscosity of the medium, the method and rate of stirring and the conditions of use of the reactants can play a major part in the form, the structure, the size and the particle size distribution of the precipitated particles, everything else being equal. However, to obtain an excellent support characterised especially by the presence of a large quantity of the electron-donor compound, (D), it is recommended to perform the precipitation reaction at a relatively low temperature, ranging from 10 to 80°C, preferably from 15 to 50°C. It is recommended, furthermore, that the precipitation reaction should take place extremely slowly, over a period ranging from 3 to 15 hours, so as to permit the incorporation of a large quantity of the compound (D) and its uniform dispersion in the support thus formed.

The first step of the preparation of the catalyst according to the present invention consists in bringing the magnesium chloride support into contact with at least one electron-donor compound containing labile hydrogen (B). The latter can be chosen from a large number of organic electron-donor compounds capable of losing a hydrogen atom. The compound (B) is preferably chosen from alcohols or phenols. In particular, an alcohol containing from 1 to 12 carbon atoms can be employed, especially ethanol, propanol, n-butanol, n-pentanol, 2-ethylhexanol or n-hexanol. A phenol such as para-cresol can also be employed. The compound (B) preferably exhibits a complexing power for magnesium chloride which is greater than that of the compound (D).

This first step can be carried out by using from 0.1 to less than 2 moles, preferably from 0.5 to 1.5 moles of the compound (B) per mole of magnesium in the support. It is preferably carried out with stirring in a liquid hydrocarbon, in particular a saturated aliphatic hydrocarbon such as n-hexane or n-heptane, or a mixture of such hydrocarbons. The contact between the support and the compound (B) can take place at a temperature ranging from 0 to 120°C, preferably from 0 to 80°C. It can last from 10 minutes to 10 hours, preferably from 30 minutes to 5 hours. In practice, the contact can be produced in various ways. For example, the compound (B) may be added to a suspension of the support kept stirred in a liquid hydrocarbon. The addition can be slow or fast. It can last from 10 minutes to 5 hours, preferably from 15 minutes to 2 hours. The suspension of the support in the liquid hydrocarbon can also be added to the compound (B) with stirring. The compound (B) can be employed in the pure state or in solution in a liquid hydrocarbon.

It is generally found that most of the compound (B) employed in this first step becomes fixed in the support without appreciably modifying the morphology and the particle size distribution of the support. Thus treated with the compound (B), the support can be washed one or more times with a liquid hydrocarbon. Bringing the support into contact with the compound (B) is essential in the preparation of the catalyst, because it provides the possibility of fixing in the support a relatively large quantity of organometallic compound (B) in order to fix afterwards in the support a relatively large quantity of titanium compound and optionally of vanadium compound.

The second step of the preparation of the catalyst comprises contacting the product of the first step with at least one organometallic compound (C) which is a reducing agent for titanium, and for vanadium when a vanadium compound is used. The organometallic compound can be chosen from organometallic compounds of metals belonging to group II or III of the Periodic Classification or the elements. Organoaluminium, organomagnesium or organozinc compounds can be employed. It is preferred to use organoaluminium compounds corresponding to the general formula

$$Al\ R_pX_{3-p}$$

in which formula R denotes an alkyl radical containing from 1 to 12 carbon atoms, X denotes a hydrogen atom or a halogen atom such as chlorine or bromine, or an alkoxy radical containing from 1 to 10 carbon atoms, and p is a whole or fractional number ranging from 1 to 3, preferably from 2 to 3. Triethylaluminium, triisobutylaluminium, tri-n-hexylaluminium, tri-n-octylaluminium or diethylaluminium chloride may be employed. The second step may be carried out by using from 0.1 to 2 moles, preferably from 0.5 to 1.5 moles of the organometallic reducing agent compound per mole of magnesium of the support. It is generally preferred to use a quantity of the organometallic reducing agent compound which is substantially equimolar to the quantity of compound (B) employed in the first step.

The support and the organometallic reducing agent compound are preferably contacted in a liquid hydrocarbon with stirring. The liquid hydrocarbon is preferably a saturated aliphatic hydrocarbon such as n-hexane or n-heptane, or a mixture of saturated aliphatic hydrocarbons. The second step can be carried out at a temperature ranging from 0 to 120°C, preferably from 0 to 100°C. It can last from 10 minutes to 10 hours, preferably from 20 minutes to 5 hours. In practice, the second step can be produced in various ways. The organometallic reducing agent compound can, for example, be added to a suspension of the support kept stirred in a liquid hydrocarbon. The addition can be slow or fast. It may last 1 minute to 5 hours, preferably 5 minutes to 2 hours. The suspension of the support in the liquid hydrocarbon can also be added to the organometallic reducing agent compound with stirring. The organometallic reducing agent compound can be employed in the pure state or in solution in a liquid hydrocarbon.

It has been found that a large part of the organometallic reducing agent compound (C) becomes fixed in the support. Nevertheless the preparation of the catalysts comprises a third step comprising in washing the support of the second step. This third step is essential in order to remove the excess of the organometallic compound not fixed in the support. The support is washed one or more times with a liquid hydrocarbon, for example with a saturated aliphatic hydrocarbon such as n-hexane or n-heptane, or a mixture of these hydrocarbons. The liquid hydrocarbon can be identical with or different from that of the support suspension. The washing or washings are preferably performed with stirring; over a period which can range from 5 minutes to 2 hours, preferably from 10 minutes to 1 hour. The support can be washed at a temperature ranging from 0 to 120°C, preferably from 0 to 80°C. In practice a washing generally consists in adding the liquid hydrocarbon to the stirred suspension of the support, in keeping the mixture thus obtained stirred and then in stopping the stirring, allowing the solid support to settle and in removing a part of the supernatant liquid phase. The washing operation can be repeated a number of times, preferably until the liquid phase of the support suspension contains in solution a quantity of metal of the organometallic reducing agent compound which is less than 1 mol % relative to the quantity of compound(s) used subsequently in step (d).

The fourth step of the catalyst preparation comprises bringing the washed solid support into contact with one or more titanium compounds which are soluble in a liquid hydrocarbon.

The titanium compound is a product which is soluble in a liquid hydrocarbon and is generally a compound in which the titanium is at its maximum valency, that is to say at the valency of 4. The titanium compound employed can be a compound which has the general formula $Ti(OR)_{4-p}X_p$ in which R is an alkyl group containing from 1 to 12 carbon atoms, X is a halogen atom such as bromine or chlorine and p is a whole or fractional number ranging from 0 to 4. Examples of these compounds are titanium tetrachloride, titanium tetraisopropoxide and titanium tetra-n-propoxide .

When the washed solid support is brought into contact only with titanium compounds, p is preferably from 1.5 to 2.5. In this case it has been found that the catalyst obtained has a relatively high activity for preparing ethylene polymers having a narrow molecular weight distribution typically comprised between 4 and 5.

The quantity of titanium compound used to prepare the catalyst depends on the desired quantity of titanium to be fixed in the support. The quantity of titanium compound to be employed during the fourth step is generally from 0.01 to 3 moles, preferably from 0.05 to 1 mole, per mole of magnesium in the support.

According to one embodiment of the invention the fourth step of the preparation of the catalyst comprises bringing the washed solid support into contact with one or more titanium compounds and with one or more vanadium compounds all of which are soluble in the liquid hydrocarbon.

The vanadium compound is soluble in a liquid hydrocarbon and is generally a compound in which the vanadium is at a valency of 4, or 5. The vanadium compound employed can be a compound which has one of the two general formulae $V(OR')_{4-m}X_m$ or $VO(OR')_{3-n}X_n$ in which R' denotes an alkyl group containing from 1 to 12 carbon atoms, X denotes a halogen atom such as bromine or chlorine, m is a whole or fractional number ranging from 0 to 4 and n is a whole or fractional number ranging from 0 to 3. Advantageously, one or more compounds chosen from vanadium tetrachloride, vanadyl trichloride, vanadyl tri-n-propoxide, vanadyl triisopropoxide, vanadyl tri-n-butoxide, vanadium tetra-n-butoxide and vanadium tetra-n-propoxide can be employed.

The quantities of the vanadium and titanium compounds used to prepare the catalyst depend on the quantities of vanadium and of titanium to be fixed in the support. The quantity of vanadium compound to be employed during the preparation of the catalyst is generally from 0.05 to 2 moles, preferably from 0.1 to 1 mole, per mole of magnesium in the support. The quantity of the vanadium compound used is in particular such that the molar ratio of the employed quantity of titanium to that of vanadium is greater than 1, and preferably greater than 2. Surprisingly, it was noted that, when the catalyst was prepared with such proportions of vanadium and titanium compounds, this catalyst became particularly suitable for manufacturing, in a gaseous phase ethylene copolymers having a molecular weight distribution, typically comprised between 4 and 8 depending on the molar ratio of the quantity of titanium to the quantity of vanadium in the catalyst.

According to the invention, during the fourth step of the preparation of the catalyst, the contact between the support and the titanium/vanadium compounds is preferably produced with stirring in a liquid hydrocarbon in which titanium/vanadium compounds are soluble. The liquid hydrocarbon can be a saturated aliphatic hydrocarbon, such as n-hexane or n-heptane or a mixture of these hydrocarbons. The contact generally takes place at a temperature ranging from 0 to 120°C preferably from 20 to 100°C.

In practice the fourth step of the process can be produced in various ways. For example when only one titanium compound is used it is possible, for example, to add the titanium compound to the suspension of the support kept stirred in the liquid hydrocarbon. The addition can be slow or fast. It can take from 0.1 minute to 3 hours, preferably from 0.5 minutes to 30 minutes, at a temperature which can range from 10 to 70°C. After the addition, the mixture thus obtained may be kept stirred for a period which can range from 10 minutes to 5 hours, preferably from 30 minutes to 3 hours, at a temperature which may range from 20 to 120°C, preferably from 30 to 100°C.

When at least two titanium compounds are brought into contact with the support, they may be added to the support simultaneously or successively one after the other, or as a premix.

When titanium and vanadium compounds are used it is possible, for example, to add to a suspension of the support in a liquid hydrocarbon the vanadium compound followed by the titanium compound , or else the titanium compound followed by the vanadium compound. These two successive additions can be immediately one after the other, or can be separated by a time ranging from a few minutes to a few hours, for example from 10 minutes to 2 hours. These two successive additions can also be separated by a washing of the intermediate solid with a liquid hydrocarbon. The two additions can be carried out quickly or slowly, over a period which can range from 10 minutes to 10 hours. They can be performed at the same temperature or at different temperatures. However, it is preferred to add to the suspension of the support in the liquid hydrocarbon either a previously prepared mixture of the vanadium and titanium compounds or, preferably, the vanadium compound and the titanium compound simultaneously. The addition may last from 10 minutes to 10 hours.

The vanadium and titanium compounds may be used in the pure state, in liquid form, or in solution in a hydrocarbon.

Although most, if not all, of the quantity of the titanium/vanadium compounds which is employed becomes fixed onto the support, the catalyst can be washed one or more times with a liquid hydrocarbon.

The fourth step of the preparation of the catalyst consists of a precipitation of the titanium/vanadium compounds in the support by a reduction reaction which changes titanium/vanadium compounds to the valency state immediately lower. The reducing agent is the compound resulting from the contact between the organometallic reducing agent (C) and the support. It is particularly surprising to find that the precipitation of the titanium/vanadium compounds takes place exclusively onto the support and that no solid particle of a compound of vanadium and/or titanium in the reduced state is formed outside the support particles. It is particularly advantageous to observe that a catalyst which is substantially free from fine or microfine particles which are active in polymerisation is obtained.

It is surprisingly found that the essentially amorphous structure, the particle size distribution and the morphology of the support do not change during the catalyst preparation. Thus, the catalyst obtained consists of particles whose physical properties are practically identical with those of the particles of the initial support. In particular, the catalyst consists of spheroidal particles which have a weight-average diameter from 10 to 100 microns, and a particle size distribution, measured as the ratio of the weight-average diameter to the number-average diameter, which is less than 3, preferably less than 2.

The advantage of this preparation is related to the fact that most, if not all, of the titanium/vanadium compounds employed during the fourth step becomes fixed in the support. It is generally found that more than 90 %, and possibly even more than 99 %, of the compounds employed during the preparation becomes fixed in the support. Another characteristic of this process is that the used compounds are fixed homogeneously throughout the support, making the catalyst more robust during the polymerisation. The combination of these advantages is due to the fact that a particular support containing the compound (D) is employed and that this support is first brought into contact with the compound (B). It is observed, furthermore, that the catalyst includes a part of the organometallic reducing agent compound employed during the preparation, but in a form converted by being brought into contact with the support and by the reduction reaction. The catalyst thus obtained can contain from 2 to 12 % by weight of titanium.

The catalyst obtained according to the process of the invention can be employed for polymerising or copolymerising alpha-olefins containing from 2 to 12 carbon atoms, such as ethylene, propylene, 1-butene, 1-hexene, 4-methyl-1-pentene or 1-octene. In particular, it can be very advantageously employed for manufacturing a large number of ethylene polymers and copolymers of a reproducible quality. For example, it can be employed for manufacturing so-called high density polyethylenes whose relative density is higher than 0.940, among which ethylene homopolymers and copolymers of ethylene and of alpha-olefins containing 3 to 12 carbon atoms figure prominently. It can also be employed for manufacturing linear low density polyethylenes with a relative density ranging from 0.920 to 0.940, consisting of copolymers of ethylene with one or more alpha-olefins containing from 3 to 12 carbon atoms, which have a weight content ranging from 90 to 96 % of units derived from ethylene, or else linear very low density polyethylenes which have a relative density ranging from 0.880 to 0.920 and consist of copolymers of ethylene and of one or more alpha-olefins containing from 3 to 12 carbon atoms, which have a weight content of units derived from ethylene which is higher than 80 % and lower than 90 %. These very low density polyethylenes can have a melt index MI, measured at 190°C under a 2 kg load, ranging from 0.1 to 10 g/10 minutes. The polymers or copolymers can be especially manufactured in suspension or in a gaseous phase. Gas phase polymerisation can be carried out in a reactor containing a fluidised and/or mechanically stirred bed. The catalyst is employed in the presence of a cocatalyst chosen from the organometallic compounds of a metal belonging to groups I, II and III of the Periodic Classification of the Elements, and optionally in the presence of an activator chosen from halogenated hydrocarbons. The catalyst and the cocatalyst are generally employed in proportions such that the molar ratio of the quantity of metal of the cocatalyst to the quantity of titanium of the catalyst is between 0.5 and 100. The (co-)polymerisation reaction can be performed at a temperature of approximately between 0°C and 100°C, preferably between 0°C and 60°C, at a total pressure ranging from 0.1 to 5 MPa. The catalysts prepared according to the invention can be used directly or after having been subjected to an olefin prepolymerisation operation carried out in one or more stages in a gaseous phase and/or in suspension in a liquid hydrocarbon medium. The prepolymerisation operation results in an increase in the size of the catalyst particles while preserving the morphology of the latter. It comprises bringing the catalyst and the cocatalyst into contact with one or more olefins. The prepolymerisation reaction can be continued while maintaining a suitable activity of the catalyst until 10 to 500 g and preferably 30 to 250 g of polyolefin is obtained per millimole of titanium.

During the (co-)polymerisation reaction an uniform development of the (co-)polymer particles is observed, their spheroidal shape being preserved and the particle size distribution remaining narrow. It is possible, in particular, to obtain an ethylene (co)polymer consisting of a non-adhesive powder which consists of spheroidal particles and which exhibits good flow properties when dry and a high apparent density, generally of between 0.3 and 0.6 $g/cm^3$. The polymer has a relatively narrow molecular weight distribution, characterised by a ratio of the weight-average molecular mass, Mw, to the number-average molecular mass, Mn, of between 3 and 11. Furthermore it can contain a very low concentration of transition metal, generally less than 10 parts per million by weight.

**Method of determining the mass-average (Dm) and number-average (Dn) diameters of particles.**

According to the invention, the weight-average (Dm) and number-average (Dn) diameters of the support or catalyst particles are measured on the basis of microscopic observations by means of the Optomax image analyser (Micro-Measurements Ltd. Great Britain). The principle of the measurement comprises in obtaining, from the experimental study of a population of particles using optical microscopy, a frequency table which gives the number ($n_i$) of particles belonging to each class (i) of diameters, each class (i) being characterized by an intermediate diameter ($d_i$) included within the limits of the said class. According to the approved French Standard NF X 11-630 of June 1981, Dm and Dn are given by the following formulae :

$$\text{weight-average diameter} \quad : Dm = \frac{\Sigma\, n_i\, (d_i)^3\, d_i}{\Sigma\, n_i\, (d_i)^3}$$

$$\text{number-average diameter} \quad : Dn = \frac{\Sigma\, n_i\, .\, d_i}{\Sigma\, n_i}$$

The ratio Dm/Dn characterises the particle size distribution ; it is sometimes called "width of the particle size distribution". The measurement using the Optomax image analyser is carried out by means of an inverted microscope which permits the examination of the suspensions of support or catalyst particles at a magnification of between 16 and 200 times. A television camera picks up the images given by the inverted microscope and transmits them to a computer which analyses the images received line by line and point by point on each line, in order to determine the particle dimensions or diameters and then to classify them.

**Measurement of the molecular mass distribution**

The molecular mass distribution of a copolymer is calculated according to the ratio of the weight-average molecular mass, $M_w$, to the number-average molecular mass, Mn, of the copolymer, from a molecular mass distribution curve obtained by means of a Waters 150 $C^{(R)}$ gel permeation chromatograph (High Temperature Size Exclusion Chromatograph), the operating conditions being the following
- solvent : 1, 2, 4-trichlorobenzene
- solvent flow rate : 1 ml/minute

7

- three Shodex[(R)] AT 80 M/S columns
- temperature : 150°C
- sample concentration : 0.1 % by weight
- injection volume : 500 microlitres
- detection by a refractometer integral with the chromatograph
- standardisation using a high density polyethylene sold by BP Chemicals S.N.C. under the trade name Rigidex 6070 EA[(R)] : Mw = 65,000 and Mw/Mn = 4, $MI_2$ = 6, and a high density polyethylene which has: Mw = 210,000 and Mw/Mn = 17.5.

The following examples illustrate the invention.

## Example 1

### Preparation of a magnesium chloride support

204 ml (1 mole) of diisoamyl ether (DIAE) are introduced at ambient temperature (20°C) and under a nitrogen atmosphere into a 5 l stainless steel reactor equipped with a stirring system rotating at 325 revolutions/minute and containing 2 moles of dibutylmagnesium in solution in 3 l of n-hexane. The reactor is maintained at 25°C. 484 ml (4.4 moles) of tert-butyl chloride are introduced into it over 12 hours. The mixture is then kept stirred for 3 hours at 25°C. The solid product obtained is washed four times with 2 litres of n-hexane. 2 moles of magnesium chloride are thus obtained, in the form of spherical particles with a mean diameter = 35 microns of particles size distribution Dm/Dn = 1.6 and having a DIAE/Mg molar ratio = 0.15 and a Cl/Mg molar ratio = 2.

## Example 2

### Preparation of a catalyst

150 ml of n-hexane containing 0.1 mole of magnesium chloride prepared in Example 1 are introduced under nitrogen atmosphere and at 20°C into a one-litre glass reactor equipped with a stirring system rotating at 400 revolutions/minute. The reactor is heated to 25°C and 20ml of n-hexane containing 0.1 mole of absolute ethanol are introduced into it over 1 hour. After the mixture has been kept stirred for 1 hour at 25°C the solid obtained is washed twice with 500 ml of hexane at 25°C. The volume of the suspension is brought back to 150 ml by removing part of the supernatant liquid phase. 100 ml of n-hexane containing 0.1 mole of triethylaluminium are then introduced over 1 hour at 50°C. After the mixture has been kept stirred for 1 hour at 50°C the solid obtained is washed twice with 500 ml of n-hexane at a temperature of 50°C and then 3 times with 500 ml of n-hexane at a temperature of 25°C. The volume of the suspension is brought back to 150 ml. 22.5 ml of n-hexane containing 9 millimoles of titanium tetrachloride are then introduced into the stirred suspension at 25°C over 2 hours. After the mixture has been kept stirred for 1 hour at 80°C the solid obtained is washed 3 times at 25°C with 500 ml of n-hexane. A spherical catalyst (1), the analysis of which is shown in Table 1, is then obtained.

## Example 3

### Preparation of a catalyst

The operation is carried out exactly as in Example 2, except for the fact of using 22.5 ml of n-hexane containing 9 millimoles of titanium tetrachloride, 22.5 ml of a mixture prepared beforehand by mixing 11.25 ml of n-hexane containing 4.5 millimoles of titanium tetrachloride and 11.25 ml of n-hexane containing 4.5 millimoles of titanium tetra-n-propoxide are used. Under these conditions a spherical catalyst (2) is obtained, whose analysis is shown in Table 1.

## Example 4

### Preparation of a catalyst

The operation is carried out exactly as in Example 2 except for the fact of using 22.5 ml of n-hexane containing 9 millimoles of titanium tetrachloride, 22.5 ml of a mixture prepared beforehand by mixing 4.5 ml of n-hexane containing 1.8 millimoles of titanium tetrachloride and 18.0 ml of n-hexane containing 7.2 millimoles of titanium tetra-n-propoxide are used. Under these conditions a spherical catalyst (3) is obtained, whose analysis is shown in Table 1.

**Example 5 (comparative)**

**Preparation of a catalyst**

150 ml of n-hexane containing 0.1 mole of magnesium chloride prepared in Example 1 are introduced under nitrogen atmosphere and at 20°C into a one-litre glass reactor equipped with a stirring system rotating at 400 revolutions/minute. The reactor is heated to 25°C and 20 ml of n-hexane containint 0.1 mole of absolute ethanol are introduced into it over 1 hour. After the mixture has been kept stirred for 1 hour at 25°C the solid obtained is washed twice with 500 ml of hexane at 25°C. The volume of the suspension is brought back to 150 ml by removing part of the supernatant liquid phase. 22.5 ml of n-hexane containing 9 millimoles of titanium tetrachloride are introduced into the stirred suspension at 25°C. After the mixture has been kept stirred for 2 hours at 80°C the solid obtained is washed 3 times at 25°C with 500 ml of n-hexane. A spherical catalyst, the analysis of which is shown in Table 1, is then obtained.

**Example 6**

**Polymerisation of ethylene in suspension**

Into a 5-litre stainless steel reactor equipped with a stirring device rotating at 750 revolutions per minute are introduced under nitrogen atmosphere 2 litres of n-hexane which are heated to 50°C, 3 millimoles of triethylaluminium and a quantity of catalyst (1) prepared in Example 2, corresponding to 0.15 millimoles of titanium. The reactor is then heated to 80°C and 800 ml of hydrogen, measured under normal conditions, and ethylene are introduced into it so as to obtain a partial ethylene pressure of 0.32 MPa. During the reaction the reactor pressure is kept constant at 0.5 MPa by repeated addition of ethylene for 1 h 30. At the end of this time, after the reactor has been degassed, a polymer whose characteristics are shown in Table 2 is recovered.

**Example 7**

**Polymerisation of ethylene in suspension**

The operation is carried out exactly as in Example 6, except for the fact that the catalyst (2) prepared in Example 3 is employed instead of the catalyst (1) prepared in Example 2, and 1.100 ml instead of 800 ml of hydrogen, and the fact that the repeated addition of ethylene lasts for 2 hours instead of 1 hour 30. Under these conditions a polymer whose characteristics are shown in Table 2 is recovered.

**Example 8**

**Polymerisation of ethylene in Suspension**

The operation is carried out exactly as in Example 6, except for the fact that the catalyst (3) prepared in Example 4 is employed in a quantity corresponding to 0.3 millimoles of titanium, instead of the catalyst (1) prepared in Example 2, 6 instead of 3 millimoles of triethylaluminium and 1.400 ml instead of 800 ml of hydrogen, and the fact that the repeated addition of ethylene lasts for 2 hours instead of 1 hour 30. Under these conditions a polymer whose characteristics are shown in Table 2 is recovered.

**Example 9**

**Preparation of a catalyst**

300 ml of n-hexane containing 0.1 mole of magnesium chloride prepared as in Example 1 are introduced under nitrogen atmosphere into a one-litre glass reactor equipped with a stirring system rotating at 300 revolutions/minute. The reactor is heated to 30°C and 20 ml of n-hexane containing 0.1 mole of n-butanol are introduced into it over 1 hour. After the mixture has been kept at 30°C for 30 minutes the solid obtained is washed twice with 500 ml of n-hexane and the volume of the suspension is brought back to 150 ml by removing part of the supernatant liquid phase. 100 ml of n-hexane containing 0.1 mole of triethylaluminium are then introduced into the reactor over 1 hour at a temperature of 50°C. After the mixture has been kept at 80°C for 1 hour the solid obtained is washed twice with 500 ml of n-hexane at 50°C and twice with 500 ml of n-hexane at 30°C and the volume of the suspension is brought back to 150 ml by removing part of the supernatant liquid phase. 100 ml of n-hexane containing a mixture consisting of 4 millimoles of vanadium oxytrichloride and of 16 millimoles of titanium tetrachloride are then introduced into the reactor at a temperature of 30°C over 2 hours. After the mixture has been kept at 80°C for 1 hour the solid obtained is washed twice at 50°C with 500 ml of n-hexane. A spherical catalyst is then obtained, the analysis of which is shown in Table 3.

## Example 10

### Preparation of a catalyst

The operation is carried out exactly as in Example 9 except for the fact that absolute ethanol is employed instead of n-butanol. A spherical catalyst whose analysis is shown in Table 3 is obtained under these conditions.

## Example 11

### Preparation of a catalyst

The operation is carried out exactly as in Example 10 except for the fact that 8 instead of 4 millimoles of vanadium oxytrichloride are employed, and 12 instead of 16 millimoles of titanium tetrachloride, and the fact that these 2 compounds are introduced separately into the reactor with 50 ml of n-hexane, instead of being introduced in the form of a mixture in 100 ml of n-hexane. A spherical catalyst whose analysis is shown in Table 3 is obtained.

## Example 12

### Preparation of a prepolymer

Into a 5-litre stainless steel reactor equipped with a stirring device rotating at 750 revolutions/minute are introduced under nitrogen 2 litres of n-hexane which are heated to 70°C, 12 millimoles of tri-n-octylaluminium, and then a quantity of the catalyst prepared in Example 11 corresponding to 4 millimoles of transition metal (vanadium and titanium). 2.5 litres of hydrogen, measured under normal conditions, are then introduced into the reactor, followed by ethylene at a uniform rate of 80 grams/hour for 4 hours. At the end of this time the content of the reactor is transferred to a rotary evaporator in order to remove the n-hexane. Under these conditions a prepolymer is obtained, which is in the form of a powder which has good flow properties, and which is stored under nitrogen atmosphere.

## Example 13

### Gas phase polymerisation of ethylene

150 g of a polymer originating from a previous polymerisation are introduced as a powder charge into a 2.5-litre stainless steel reactor equipped with a stirring system for dry powder, rotating at 250 revolutions per minute and kept under nitrogen atmosphere, followed by a quantity of prepolymer prepared in Example 12 and containing 0.1 millimole of transition metal (vanadium and titanium). The reactor is heated to 90°C and hydrogene is introduced into it so as to obtain a pressure of 0.2 MPa and ethylene so as to obtain a total pressure of 0.5 MPa. Ethylene is introduced into the reactor during the reaction so as to maintain a constant total pressure. After 4 hours' reaction 650 g of a polymer powder which has the following characteristics are recovered :
- transition metal content : 10 ppm
- relative density : 0.962
- apparent density : 0.44 g/cm$^3$
- melt index measured at 190°C under a 2 kg load : 1.3 g/10 minutes
- weight-average particle diameter Dm : 410 microns

- Dm/Dn ratio of the weight-average diameter to the number-average diameter : 1.9

## Example 14

### Gas phase copolymerisation of ethylene and 1-butene

150 g of polymer powder originating from a previous polymerisation and which has been stored under nitrogen are introduced as a powder charge, together with 2 millimoles of triethylaluminium, under nitrogen atmosphere into a 2.5-litre stainless steel reactor equipped with a stirring system for dry powder, rotating at 250 revolutions per minute, followed by a quantity of prepolymer prepared in Example 12 and containing 0.1 millimole of transition metal (vanadium and titanium). The reactor is then heated to 80°C and a quantity of hydrogen is introduced into it so as to obtain a pressure of 0.012 MPa, and a gas mixture containing 95 mol % of ethylene and 5 mol % of 1-butene so as to obtain a total pressure of 0.4 MPa. This mixture of ethylene and 1-butene is introduced into the reactor during the reaction so as to maintain a constant pressure. After 3 hours'reaction 680 g of a polymer powder has the following characteristics are recovered :
- transition metal content : 10 ppm
- relative density : 0.916
- apparent density : 0.41 g/ml
- melt index measured at 190°C under a 2 kg load : 3.1 g/10 minutes
- weight average particle diameter Dm : 420 microns
- Dm/Dn ratio of the weight-average diameter to the number-average diameter : 2.

Table 1

| Catalyst analyses | | | | |
|---|---|---|---|---|
| Examples | 2 | 3 | 4 | 5(comp) |
| Molar ratio of titanium to magnesium | 0.091 | 0.093 | 0.090 | 0.013 |
| Molar ratio of titanium III to total titanium | 0.49 | 0.22 | 0.02 | - |
| Aluminium/magnesium molar ratio | 0.085 | 0.085 | 0.068 | 0.00 |
| Ethanol/aluminium molar ratio | 0.81 | 0.95 | 1.28 | - |
| Propanol/magnesium molar ratio | - | 0.16 | 0.26 | 0.00 |
| Chlorine/magnesium molar ratio | 2.31 | 2.17 | 1.90 | 2.05 |

Table 2

| Ethylene polymer analyses | | | |
|---|---|---|---|
| Examples | 6 | 7 | 8 |
| Weight of polymer manufactured in g | 535 | 450 | 565 |
| Melt index measured at 190°C under a 2.16 kg load in g/10 minutes | 0.57 | 2.51 | 2.82 |
| Weight-average molecular mass | 126 000 | 97 000 | 86 500 |
| Molecular mass distribution | 5.7 | 5.1 | 4.0 |
| Apparent density in g/cm3 | 0.36 | 0.35 | 0.37 |

Table 3

| Analysis of the catalysts | | | |
|---|---|---|---|
| Examples | 9 | 10 | 11 |
| Vanadium/magnesium solar ratio | 0.035 | 0.04 | 0.08 |
| Titanium/magnesium molar ratio | 0.14 | 0.16 | 0.12 |
| Aluminium/magnesium molar ratio | 0.13 | 0.17 | 0.17 |
| Chlorine/magnesium molar ratio | 2.7 | 2.85 | 2.7 |
| Diisoamyl ether/magnesium molar ratio | 0 | 0 | 0 |
| Molar ratio of vanadium 4 to total vanadium | 0.8 | 0.90 | 0.90 |
| Molar ratio of titanium 3 to total titanium | 0.8 | 1 | 1 |
| Dm (micron) | 30 | 32 | 31 |
| Dm/Dn ratio | 1.8 | 1.7 | 1.7 |

## Claims

1. A process for the preparation of a catalyst of the Ziegler-Natta type comprising precipitating titanium onto a spheroidal magnesium chloride support characterised, in that the process comprises following steps,

   (a) contacting a magnesium chloride support (A) with an electron-donor compound (B) which contains labile hydrogen

   (b) contacting the product of (a) with an organometallic compound (C) which is a reducing agent for titanium

   (c) washing the product of (b) with a liquid hydrocarbon and

   (d) contacting the product of (c) with at least one titanium compound soluble in the liquid hydrocarbon.

   and in that the magnesium chloride support (A) comprises from 80 to 99,5 mol % of magnesium chloride and from 0.5 to 20 mol % of an electron-donor compound (D) free from labile hydrogen, and is in the form of spheroidal particles which have a weight average diameter, Dm of from 10 to 100 microns and a narrow particle size distribution such that the ratio of the weight average diameter, Dm, to the number average diameter, Dn, is less than 3.

2. A process according to Claim 1, characterised in that step (d) comprises contacting the product of (c) with at least one titanium compound and with at least one vanadium compound both the vanadium and titanium compounds being soluble in the liquid hydrocarbon and used in such quantities that the molar ratio of the quantity of titanium to the quantity of vanadium is greater than 1, and in that the organometallic compound (C) is also reducing agent for vanadium.

3. Process according to any one of Claims 1 to 2, characterised in that the electron-donor compound free from labile hydrogen, (D), is chosen from ethers, thioethers, sulphones, sulphoxides, phosphines, phosphoramides, amines and amides.

4. Process according to any one of Claims 1 to 3, characterised in that the electron-donor compound containing labile hydrogen, (B), is chosen from alcohols and phenols.

5. A process according to any one of Claims 1 to 4, characterised in that from 0.1 to less than 2 moles of the compound (B) are used per mole of magnesium in the support.

6. A process according to any one of Claims 1 to 5, characterised in that the organometallic reducing agent compound (C) is chosen from organoaluminium, organomagnesium and organozinc compounds.

7. A process according to any one of Claims 1 to 6, characterised in that the titanium compound is of general formula $Ti(OR)_{4-p}X_p$ in which R is an alkyl group containing from 1 to 12 carbon atoms, X is a halogen atom such as bromine or chlorine, and p is a whole or fractional number ranging from 0 to 4.

8. A process according to Claim 7, characterised in that p is a whole or fractional number ranging from 1,5 to 2,5.

9. Process according to any one of Claims 1 to 8, characterised in that from 0.01 to 3 moles of titanium compound are used per mole of magnesium of the support.

10. Use of the catalyst prepared according to any one of Claims 1 to 9 for polymerising or copolymerising alpha-olefins containing from 2 to 12 carbon atoms.